(19) Europäisches Patentamt
European Patent Office
Office européen des brevets

(11) EP 4 117 064 A1

(12) # EUROPEAN PATENT APPLICATION

(43) Date of publication:
**11.01.2023 Bulletin 2023/02**

(21) Application number: **21183623.4**

(22) Date of filing: **05.07.2021**

(51) International Patent Classification (IPC):
***H01M 8/18** (2006.01)*

(52) Cooperative Patent Classification (CPC):
**H01M 8/188**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universität des Saarlandes
66123 Saarbrücken (DE)**

(72) Inventors:
- **CHEN, Ruiyong
Liverpool (GB)**
- **HEMPELMANN, Rolf
St. Ingbert (DE)**
- **HUANG, Zhifeng
Saarbrücken (DE)**
- **KIM, Sangwon
Saarbrücken (DE)**

(74) Representative: **Schiweck Weinzierl Koch Patentanwälte Partnerschaft mbB
Ganghoferstraße 68 B
80339 München (DE)**

(54) **COMPOSITION SUITABLE FOR USE AS AN ELECTROLYTE**

(57) The present invention relates to a composition suitable for use as an electrolyte in a battery, comprising (i) at least one ionic liquid comprising an organic cation and (ii) at least one redox active organic compound, wherein the composition is free of solvent.

EP 4 117 064 A1

## Description

### TECHNICAL FIELD

The present invention relates to compositions suitable for use as an electrolyte in a battery, methods for preparing such compositions, uses of such compositions in a battery, and batteries comprising such compositions.

### BACKGROUND

As one of the most promising candidates for large-scale energy storage, redox flow batteries, having decoupled electrode and electrolyte components, allow flexible and scalable modular design. Redox flow batteries store energy in fluidic electrolytes. The limited energy density of redox flow batteries is a barrier for their wide implementation in the market. The energy density of redox flow batteries depends on the operating voltage, the concentration of the electroactive materials, and the number of electrons transferred in the redox reactions. Rechargeable batteries that use organic redox-active materials have attracted great attention in terms of low-cost, abundance and structural tunability [Y. Ding, et al., Chem. Soc. Rev., 2018, 47, 69; Z. Song et al., Energy Environ. Sci., 2013, 6, 2280]. The research in organic materials for redox flow batteries is booming in the recent years [X. Wei, et al., ACS Energy Lett. 2017, 2, 2187].

Conventional aqueous electrolyte systems have a relative low energy density because of a low solubility of electroactive materials [Ding, Y.; et al., Chem. Soc. Rev., 2017, 47, 69]. Alternatively, eutectic electrolytes have been recently proposed to boost the capacity of redox flow batteries due to a high concentration of the electroactive materials [Y. Wang, et al., Energy Environ. Sci. 2016, 9, 2267]. In general, an eutectic electrolyte can be obtained by physically mixing the electroactive material with a second compound. No chemical reaction steps are needed. The mixture has a reduced melting point, compared to the two parent compounds due to the interactions between those components.

There is an ongoing need to provide further compositions suitable for use as an electrolyte in a battery.

### SUMMARY

Accordingly, the present invention relates to a composition suitable for use as an electrolyte in a battery, comprising (i) at least one ionic liquid comprising an organic cation and (ii) at least one redox active organic compound, wherein the composition is free of solvent.

The present invention also relates to a method of preparing a composition suitable for use as an electrolyte in a battery, comprising mixing of at least one ionic liquid comprising an organic cation in the molten state and at least one redox-active organic compound, wherein the composition is free of solvent.

The present invention also relates to a composition suitable for use as an electrolyte in a battery, which is obtainable or being obtained by a method of preparing a composition as described herein.

The present invention also relates to a use of a composition as described herein as an electrolyte in a battery.

The present invention also relates to a battery comprising a composition as described herein.

### BRIEF DESCRIPTION OF THE DRAWINGS

**Fig. 1** Concentrations and redox potentials of several redox active organic compounds in the molten mixtures of these organic compounds (from left to right: phthalimide, 2,6-dihydroxyanthraquinone, 1,4-benzoquinone, 2-methoxyhydroquinone, 4-hydroxy-TEMPO) and BMImCl.

**Fig. 2** (a) Cyclic voltammetry (CV) curves of a mixture of 4-hydroxy-TEMPO (0.02 M) and BMImCl, measured at potential scan rates from 10 to 200 mV $s^{-1}$ at room temperature. (b) Discharge curves of a static cell with 0.8 M 4-hydroxy-TEMPO in BMImCl and 0.8 M $V^{3+}$ in $H_2SO_4$ at a current density of 1.25 mA $cm^{-2}$ at 55 °C, and (c) the corresponding cycling stability.

**Fig. 3** (a) CV curves of the 1$^{st}$, 60$^{th}$, and 120$^{th}$ cycles of 0.02 M 2-methoxyhydroquinone in BMImCl with 0.01 M HCl at 50 mV $s^{-1}$ and room temperature. (b) Charge and discharge curves of an electrochemical cell with 4 M 2-methoxyhydroquinone in BMImCl (static) and 1.6 M $V^{3+}$ (flow, 35 mL $min^{-1}$) at 5 mA $cm^{-2}$ at 35 °C, and (c) the corresponding cycling performance over 50 cycles at 35 °C.

**Fig. 4** CV curve of 0.2 M 1,4-benzoquinone in BMImCl at a scan rate of 50 mV $s^{-1}$ and room temperature.

**Fig. 5** CV curve of 0.05 M 2,6-dihydroxyanthraquinone in BMImCl at a scan rate of 50 mV $s^{-1}$ and room temperature.

**Fig. 6** CV curve of 0.05 M phthalimide in BMImCl at a scan rate of 50 mV $s^{-1}$ and room temperature.

**Fig. 7** Differential scanning calorimetry (DSC) curve b measured of a composition comprising 3.9 M 4-hydroxy-TEMPO in BMImCl. For comparison, also DSC curves a are depicted for heating and cooling of 4-hydroxy-TEMPO

alone, i.e. in the unmixed state.

**Fig. 8** UV-vis spectra of a composition comprising BMImCl and 4-hydroxy-TEMPO after storage of the composition at 80°C for 0 h, 1.0 h, 1.5 h, 3.0 h, and 15.5 h. For comparison, the lower curve shows the UV-vis spectrum of blank BMImCl alone, i.e. in the unmixed state.

## DETAILED DESCRIPTION

The present invention relates to a composition suitable for use as an electrolyte in a battery, comprising (i) at least one ionic liquid comprising an organic cation and (ii) at least one redox active organic compound, wherein the composition is free of solvent.

The present inventors have found that, surprisingly, despite that a composition comprising (i) an ionic liquid comprising an organic cation and (ii) a redox active organic compound is free of solvent, can be liquid over a broad temperature range. It is noted that, individually, both the ionic liquid and the redox active organic compound are not necessarily liquid over this broad temperature range. As illustrative, but non-limiting examples, a composition of the present invention, which comprises an ionic liquid and a redox active organic compound and which is free of solvent, may be liquid in a temperature range of e.g. from about -80°C to about +300°C, of e.g. from about -80°C to about +280°C, of e.g. from about -80°C to about +250°C, of e.g. from about -80°C to about 200°C, of e.g. from about - 80°C to about +150°C, of e.g. from about -60 °C to about +130 °C, preferably of e.g. from about -50°C to about +120°C, of e.g. from about -40°C to about +100°C, of e.g. from about - 20°C to about +80°C, of e.g. from about 0°C to about +70 °C, or of e.g. from about +20°C to about +70°C, or at about +20°C. Compositions, which have such liquidity properties, are highly useful as electrolyte in an electrochemical device using flowing systems, in particular such as e.g. in a redox flow battery. However, by using a suitable membrane, the liquid composition can be also used in a static electrochemical cell. Since the composition is free of solvent, a high concentration of the redox active organic compound can be achieved. Accordingly, the composition of the present disclosure provides for a high energy density. Also, the composition exhibits an enhanced volumetric capacity for batteries.

It is noted that aqueous compositions, which are useful as electrolytes and comprise organic liquids or lithium salts and a redox-active organic compound are described in WO 2019/174910. Further, compositions suitable as electrolytes, which comprise a lithium fluoroalkylsulfonyl salt and a redox-active organic compound are described in K. Takechi et al., "A Highly Concentrated Catholyte Based on a Solvate Ionic Liquid for Rechargeable Flow Batteries", Adv. Mater. 2015, 27, 2501-2506, and in US 2016/0197371. The present invention provides a composition comprising (i) an ionic liquid comprising an organic cation and (ii) a redox active organic compound, and which is free of solvent.

The term "ionic liquid", which may be also denoted as "ionic salt" or "organic salt", typically refers to a salt, which has an organic cation, in the liquid state. As illustrative, but non-limiting examples, an ionic liquid may be liquid at a temperature of less than about 300°C, less than about 280°C, less than about 250°C, less than about 200°C, less than about 150°C, less than about 120°C, less than about 100°C, or less than about 70°C, e.g. at room temperature (about 20°C). As illustrative, non-limiting examples, an ionic liquid may have a melting point of less than about 300°C, less than about 280°C, less than about 250°C, less than about 200°C, less than about 150°C, less than about 120°C, less than about 100°C, or less than about 70°C.

"Free of solvent", or "solvent-free", or the like, when used herein, refers to a composition of the present disclosure which is substantially free of a solvent. The term "solvent", as used herein, may refer to any solvent known to a person skilled in the art, and includes e.g. organic and inorganic solvents. Illustrative, non-limiting examples for solvents, of which the composition of the present disclosure is substantially free, are water, methanol, ethanol, propanol, dimethoxy methane, tetrahydrofuran, 2-methyltetrahydrofuran, 1,4-dioxane, 1,3-dioxolane, acetone, acetylacetone, acetonitrile, methoxyacetonitrile, priopionitrile, butyronitrile, isobutyronitrile, benzonitrile, ethylenediamine, formamide, N-methylacetamide, N,N-dimethylformamide, N,N-dimethylacetamide, N-methyl-2-pyrrolidone, propylene carbonate, ethylene carbonate, gamma-butyrolactone, gamma-valerolactone, dimethyl carbonate, diethyl carbonate, hexane, benzene, toluene, nitromethane, nitrobenzene, 1,2-dichloroethane, dimethyl sulfoxide, ethyl acetate, nitroethane, or the like. As readily appreciated by a person skilled in the art, a composition free of solvent, or a solvent free composition, as described herein, can be obtained, as illustrative non-limiting example, by employing the components free of solvent, and/or by not using or adding solvent during or after the preparation process (see also Examples 1, 2, 3, 4, 5 and 6 further below). Nevertheless, a composition denoted herein as free of solvent or solvent-free, may comprise residual solvent, e.g. as impurity being already present in the starting components or entered (in particular unintentionally) during the preparation process. Optionally, if deemed appropriate according to circumstances, measures may be taken to minimize or prevent the introduction of solvent into the composition. A person skilled in the art knows to select suitable measures for preventing the introduction of solvent. As merely illustrative example, moisture (i.e. water) from air can be kept away by applying an inert atmosphere (e.g. argon or nitrogen gas) or vacuum. Accordingly, the starting materials and the resulting compositions may be stored and handled under an inert atmosphere. Similarly, for example, the preparation of the composition, in particular the mixing of the ionic liquid and the redox-active organic compound, can be carried out under an

inert atmosphere. The content of residual solvent in the composition may be, for example, less than 5% by weight based on 100% by weight of the total weight of the composition. The content of residual solvent in the composition may be, e.g., less than 4.5% by weight based on 100% by weight of the total weight of the composition. The content of residual solvent in the composition may be, e.g., less than 4% by weight based on 100% by weight of the total weight of the composition. The content of residual solvent in the composition may be, e.g., less than 3.5% by weight based on 100% by weight of the total weight of the composition. The content of residual solvent in the composition may be, e.g., less than 3% by weight based on 100% by weight of the total weight of the composition. The content of residual solvent in the composition may be, e.g., less than 2.5% by weight based on 100% by weight of the total weight of the composition. The content of residual solvent in the composition may be, e.g., less than 2.0% by weight based on 100% by weight of the total weight of the composition. The content of residual solvent in the composition may be, e.g., less than 1.5% by weight based on 100% by weight of the total weight of the composition. The content of residual solvent in the composition may be, e.g., less than 1.2% by weight based on 100% by weight of the total weight of the composition. In particular, the content of residual solvent in the composition may be, e.g., less than 1.0% by weight based on 100% by weight of the total weight of the composition. The content of residual solvent in the composition may be, e.g., less than 0.9% by weight based on 100% by weight of the total weight of the composition. The content of residual solvent in the composition may be, e.g., less than 0.8% by weight based on 100% by weight of the total weight of the composition. The content of residual solvent in the composition may be, e.g., less than 0.7% by weight based on 100% by weight of the total weight of the composition. The content of residual solvent in the composition may be, e.g., less than 0.6% by weight based on 100% by weight of the total weight of the composition. The content of residual solvent in the composition may be, e.g., less than 0.5% by weight based on 100% by weight of the total weight of the composition. The content of residual solvent in the composition may be, e.g., less than 0.4% by weight based on 100% by weight of the total weight of the composition. The content of residual solvent in the composition may be, e.g., less than 0.3% by weight based on 100% by weight of the total weight of the composition. The content of residual solvent in the composition may be, e.g., less than 0.24% by weight based on 100% by weight of the total weight of the composition. The content of residual solvent in the composition may be, e.g., less than 0.2% by weight based on 100% by weight of the total weight of the composition. The content of residual solvent in the composition may be, e.g., less than 0.1% by weight based on 100% by weight of the total weight of the composition. The content of residual solvent in a composition of the present disclosure can be, for example, calculated from the residual solvent contents of the components, e.g. the ionic liquid, which are used for preparing the composition (see, e.g., Example 1 herein). The residual solvent contents of the component can be taken, for example, from the specification (e.g. technical datasheets, or certificates of analysis) provided by the supplier. The conditions of preparing a composition of the present disclosure can be adjusted, where appropriate, according to circumstances so that a residual solvent content, which has been calculated, can be achieved, e.g. by applying measures described herein for minimizing or preventing the introduction of solvent into the composition. Alternatively or in addition, analytical methods can be used to determine the content of residual solvent in a composition of the present disclosure. Methods to determine the residual solvent content are generally known in the art and include, e.g., high-performance liquid chromatography (HPLC), high-performance liquid chromatography-mass spectrometry (HPLC-MS), gas chromatography (GC), gas chromatography-mass spectrometry (GC-MS), nuclear magnetic resonance (NMR) spectroscopy, infrared (IR) spectroscopy, measuring the weight loss of a sample during heating (loss on drying, LOD), thermogravimetric analysis (TGA), differential thermal analysis (DTA), differential scanning calorimetry (DSC), thermogravimetry-differential scanning calorimetry (TG-DSC), Karl-Fischer titration, or the like. A person skilled in art knows to readily select a suitable method to determine the residual solvent content. In particular, in some embodiments, the content of residual solvent in a composition of the present disclosure can be determined using gas chromatography (GC). Optionally, gas chromatography may be coupled with mass spectrometry (GC-MS). Suitable methods of gas chromatography for determining the content of residual solvent in a composition described herein are known, and are readily selected by a person skilled in the art. For example, suitable gas chromatographic methods are described in C. B'Hymer, Residual Solvent Testing: A Review of Gas-Chromatographic and Alternative Techniques, Pharmaceutical Research, Vol. 20, No. 3, 2003, pp. 337 to 344, the content of which is incorporated herein by reference in its entirety. The gas chromatographic methods described in this reference of B'Hymer can be applied for determining the content of residual solvent in the compositions described herein. As e.g. described in B'Hymer, the gas chromatographic methods may include direct injection of a solution of a sample of the composition into the gas chromatography equipment, headspace analysis, or solid-phase microextraction. Accordingly, in some embodiments, the gas chromatographic method for determining the content of residual solvent in a composition of the present disclosure may comprise direct injection of a solution of a sample of a composition described herein; the solution may be obtained, e.g., by dissolving the composition in a solvent, or extracting the composition with a solvent. In some embodiments, the gas chromatographic method may comprise headspace analysis, e.g. dynamic headspace analysis or static headspace analysis. In particular, the gas chromatographic method may comprise static headspace analysis. Automated systems for static headspace analysis are commercially available and can be used for determining the content of residual solvent in a composition of the present disclosure. In some embodiments, the gas chromatographic method may comprise solid-phase microextraction, e.g. used as direct extraction or immersion, or as headspace solid-phase microextraction. In some embodiments, when the solvent to be determined is water, Karl Fischer titration can be used to determine the content of residual water in a composition described herein. For example, the Karl Fischer titration can be carried out according to standard ASTM E203-01.

In some embodiments, the composition may comprise (i) one ionic liquid comprising an organic cation, and (ii) one redox active organic compound, wherein the composition is free of solvent.

In some embodiments, the composition may consist of, or may essentially consist of, (i) at least one ionic liquid comprising an organic cation, and (ii) at least one redox active organic compound.

In some embodiments, the composition may consist of, or may essentially consist of, (i) one ionic liquid comprising an organic cation, and (ii) one redox active organic compound.

In general, the ionic liquid comprises an anion, and an organic cation. The anion is not particularly limited; for example, any anion suitable for use as an anion in an ionic liquid can be employed. Preferably, the ionic liquid comprises an anion and a larger organic cation. In particular, the anion may be a small anion, which means that the anion is smaller in size than the organic cation, which is larger than the anion. Preferably, the anion is selected from the group consisting of a halogenide (e.g., $F^-$, $Cl^-$, $Br^-$, $I^-$), nitrate ($NO_3^-$), an alkyl sulfonate (e.g., methane sulfonate), hexafluorophosphate, tetrafluoroborate, bis(trifluoromethylsulfonylamide) and any combination thereof.

Accordingly, the anion may be bis(trifluoromethylsulfonylamide).

The anion may be tetrafluoroborate.

The anion may be hexafluorophosphate.

The anion may be an alkyl sulfonate (e.g., methane sulfonate).

Preferably, the anion may be nitrate ($NO_3^-$).

Preferably, the anion is a halogenide (e.g., $F^-$, $Cl^-$, $Br^-$, $I^-$). More preferably, the anion is a halogenide selected from the group consisting of $Cl^-$ (chloride), $Br^-$ (bromide) and $I^-$ (iodide). Still more preferably, the anion is $Cl^-$ or $Br^-$. Even more preferably, the anion is $Cl^-$.

Preferably, the organic cation is selected from the group consisting of imidazolium, pyridinium, piperidinium, pyrrolidinium, guanidinium, tetra-($C_1$-$C_6$)alkylammonium and any combination thereof. Optionally, imidazolium, pyridinium, piperidinium, pyrrolidinium or guanidinium can be substituted with 1 to 3 ($C_1$-$C_6$)alkyl groups, preferably with 2 ($C_1$-$C_6$)alkyl groups.

"Alkyl", unless defined otherwise elsewhere, refers to a saturated straight-chain or branched hydrocarbon radical. "($C_1$-$C_6$)alkyl", or the like, refers to an alkyl group having 1, 2, 3, 4, 5 or 6 carbon atoms. Illustrative non-limiting examples include methyl, ethyl, propyl (preferably n-propyl), 1-methylethyl, butyl (preferably n-butyl), or the like. Whenever mentioned herein, "($C_1$-$C_6$)alkyl" may be preferably "($C_1$-$C_4$)alkyl", which refers to an alkyl group having 1, 2, 3 or 4 carbon atoms.

Preferably, the organic cation is imidazolium. Optionally, the imidazolium can be substituted with 1 to 3 ($C_1$-$C_6$)alkyl groups, more preferably with 2 ($C_1$-$C_6$)alkyl groups. The anion may be, for example, any anion as described herein. More preferably, the anion may be $Cl^-$. More preferably, the ionic liquid has the following formula:

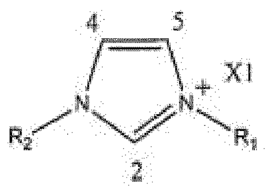

,

wherein $R_1$ and $R_2$ are each independently a ($C_1$-$C_6$)alkyl group and X1 is an anion. The anion may be, for example, any anion as described herein. More preferably, the anion is $Cl^-$. In preferred embodiments, $R_1$ is butyl, more preferably n-butyl, and $R_2$ is methyl. Also, in preferred embodiments, $R_1$ is ethyl and $R_2$ is methyl. In more preferred embodiments, the ionic liquid is 1-butyl-3-methylimidazolium chloride. In more preferred embodiments, the ionic liquid is 1-ethyl-3-methylimidazolium chloride.

Preferably, the organic cation is pyridinium. Optionally, the pyridinium can be substituted with 1 to 3 ($C_1$-$C_6$)alkyl groups, preferably with 2 ($C_1$-$C_6$)alkyl groups. The anion may be, for example, any anion as described herein. More preferably, the anion may be $Cl^-$. In preferred embodiments, the ionic liquid is 1-butyl-2-methylpyridinium chloride. Also, in preferred embodiments, the ionic liquid is 1-butyl-3-methylpyridinium chloride.

Preferably, the organic cation is pyrrolidinium. Optionally, the pyrrolidinium can be substituted with 1 to 3 ($C_1$-$C_6$)alkyl groups, preferably with 2 ($C_1$-$C_6$)alkyl groups. The anion may be, for example, any anion as described herein. More preferably, the anion may be $Cl^-$. In preferred embodiments, the ionic liquid is 1-butyl-1-methylpyrrolidinium chloride.

Preferably, the organic cation is piperidinium. Optionally, the piperidinium can be substituted with 1 to 3

($C_1$-$C_6$)alkyl groups, preferably with 2 ($C_1$-$C_6$)alkyl groups. The anion may be, for example, any anion as described herein. More preferably, the anion may be $Cl^-$. In preferred embodiments, the ionic liquid is 1-methyl-1-propylpiperidinium chloride.

The organic cation may be guanidinium. Optionally, the guanidinium can be substituted with 1 to 3 ($C_1$-$C_6$)alkyl groups, preferably with 2 ($C_1$-$C_6$)alkyl groups. The anion may be, for example, any anion as described herein. More preferably, the anion may be $Cl^-$.

The organic cation may be tetra-($C_1$-$C_6$)alkylammonium. As an illustrative example, the tetra-($C_1$-$C_6$)alkylammonium may be tetra-n-butylammonium. The anion may be, for example, any anion as described herein. More preferably, the anion may be $Cl^-$.

Any organic cation and any anion, as described herein, can be combined with each other.

A "redox-active organic compound", as used herein, can be any organic compound which can access different oxidation states, e.g. by donation or acceptance of one or more electrons. Preferably, the redox active organic compound is selected from the group consisting of an organic radical, a quinone, a phthalimide, a phthalocyanine, a porphyrine, and any combination thereof.

Preferably, the redox active organic compound is an organic radical. More preferably, the organic radical is 2,2,6,6-tetramethylpiperidinyloxyl. Optionally, the 2,2,6,6-tetramethylpiperidinyloxyl can be substituted with 1 to 3 hydroxy groups, preferably with 1 or 2 hydroxy group, more preferably with 1 hydroxy group. In preferred embodiments, the organic radical is 2,2,6,6-tetramethylpiperidinyloxyl (TEMPO). Also, in preferred embodiments, the organic radical is 4-hydroxy-2,2,6,6-tetramethylpiperidinyloxyl (4-hydroxy-TEMPO).

In some preferred embodiments, the redox-active organic compound is an organic radical, and the organic cation is imidazolium, which can be optionally substituted with 1 to 3 ($C_1$-$C_6$)alkyl groups, preferably with 2 ($C_1$-$C_6$)alkyl groups; the anion may be, for example, any anion as described herein; more preferably, the anion may be $Cl^-$. More preferably, in some embodiments, the organic radical is 2,2,6,6-tetramethylpiperidinyloxyl, which can be optionally substituted with 1 to 3 hydroxy groups, preferably with 1 or 2 hydroxy group, more preferably with 1 hydroxy group; and the organic cation is imidazolium, which can be optionally substituted with 1 to 3 ($C_1$-$C_6$)alkyl groups, preferably with 2 ($C_1$-$C_6$)alkyl groups; the anion may be, for example, any anion as described herein; more preferably, the anion may be $Cl^-$. Even more preferably, the redox-active organic compound is 4-hydroxy-2,2,6,6-tetramethylpiperidinyloxyl (4-hydroxy-TEMPO), and the ionic liquid is 1-butyl-3-methylimidazolium chloride.

Preferably, the redox active organic compound is a quinone. The term "a quinone", as used herein, refers to a member of the compound class of quinones. The quinone may be an unsubstituted quinone, or a substituted quinone. Preferably, the quinone is a benzoquinone. The benzoquinone may be an unsubstituted benzoquinone, or a substituted benzoquinone. Preferably, the quinone is a hydroquinone. The hydroquinone may be an unsubstituted hydroquinone, or a substituted hydroquinone. Preferably, the quinone is an anthraquinone. The anthraquinone may be an unsubstituted anthraquinone or a substituted anthraquinone. In any one of these embodiments, when referred to as "substituted", the quinone, benzoquinone, hydroquinone or anthraquinone may be substituted with at least one ($C_1$-$C_6$)alkyl group; and/or at least one ($C_1$-$C_6$)alkoxy group; and/or at least one hydroxy group.

Preferably, the quinone is a 1,4-benzoquinone. The term "a 1,4-benzoquinone", as used herein, refers to a member of the compound class of 1,4-benzoquinones. In some preferred embodiments, the quinone is unsubstituted 1,4-benzoquinone, which is also known as just "1,4-benzoquinone" or "para-quinone", and which has the IUPAC name cyclohexa-2,5-diene-1,4-dione. Optionally, in alternative embodiments, 1,4-benzoquinone (cyclohexa-2,5-diene-1,4-dione) can be substituted with 1 to 4, preferably 1 or 2, ($C_1$-$C_6$)alkyl groups; and/or, optionally, 1,4-benzoquinone (cyclohexa-2,5-diene-1,4-dione) can be substituted with 1 to 4, preferably 1 or 2, ($C_1$-$C_6$)alkoxy groups.

"Alkoxy", unless defined otherwise elsewhere, refers to a straight-chain or branched alkyl radical which is attached via an oxygen atom (-O-) to the basic structure. "($C_1$-$C_6$)alkoxy", or the like, refers to an alkoxy group having 1, 2, 3, 4, 5 or 6 carbon atoms. Illustrative non-limiting examples include methoxy, ethoxy, propoxy (preferably n-propoxy), 1-methylethoxy, or the like. Whenever mentioned herein, "($C_1$-$C_6$)alkoxy" may be preferably "($C_1$-$C_4$)alkoxy", which refers to an alkoxy group having 1, 2, 3 or 4 carbon atoms.

In some embodiments, the quinone is a hydroquinone. The term "a hydroquinone", as used herein, refers to a member of the compound class of hydroquinones. In some embodiments, the quinone is unsubstituted hydroquinone, which is also known as just "hydroquinone" and which has the IUPAC name benzene-1,4-diol. In some preferred embodiments, the quinone is hydroquinone (benzene-1,4-diol), which is substituted with 1 to 4, preferably 1 or 2, ($C_1$-$C_6$)alkyl groups; and/or substituted with 1 to 4, preferably 1 or 2, ($C_1$-$C_6$)alkoxy groups. More preferably, the quinone is hydroquinone (benzene-1,4-diol), which is substituted with 1 or 2 ($C_1$-$C_6$)alkoxy groups, preferably with 1 or 2 methoxy groups. Still more preferably, the quinone is 2-methoxy-hydroquinone.

In some preferred embodiments, the quinone is an anthraquinone. The term "an anthraquinone", as used herein, refers to a member of the compound class of anthraquinones. In some embodiments, the quinone is unsubstituted anthraquinone, which is also known as just "anthraquinone" and which has the IUPAC name anthracene-9,10-dione. Optionally, in alternative embodiments, anthraquinone (anthracene-9,10-dione) can be substituted with 1 to 4, preferably

1 or 2, ($C_1$-$C_6$)alkyl groups; and/or optionally, anthraquinone (anthracene-9,10-dione) can be substituted with 1 to 4, preferably 1 or 2, ($C_1$-$C_6$)alkoxy groups; and/or optionally, anthraquinone (anthracene-9,10-dione) can be substituted with 1 to 4, preferably 1 or 2, hydroxy groups. In some preferred embodiments, the quinone is anthraquinone (anthracene-9,10-dione) substituted with 1 to 4 hydroxy groups, preferably with 1 to 3 hydroxy groups, more preferably with 2 hydroxy groups. More preferably, the quinone is 2,6-dihydroxyanthraquinone.

In some preferred embodiments, the redox-active organic compound is 1,4-benzoquinone (cyclohexa-2,5-diene-1,4-dione), which can be optionally substituted with 1 to 4, preferably 1 or 2, ($C_1$-$C_6$)alkyl groups; and/or optionally substituted with 1 to 4, preferably 1 or 2, ($C_1$-$C_6$)alkoxy groups; and the organic cation is imidazolium, which can be optionally substituted with 1 to 3 ($C_1$-$C_6$)alkyl groups, preferably with 2 ($C_1$-$C_6$)alkyl groups; the anion may be, for example, any anion as described herein; more preferably, the anion may be $Cl^-$. More preferably, in some embodiments, the redox-active organic compound is unsubstituted 1,4-benzoquinone (cyclohexa-2,5-diene-1,4-dione); and the organic cation is imidazolium, which can be optionally substituted with 1 to 3 ($C_1$-$C_6$)alkyl groups, preferably with 2 ($C_1$-$C_6$)alkyl groups; the anion may be, for example, any anion as described herein; still more preferably, the anion may be $Cl^-$. Even more preferably, the redox-active organic compound is unsubstituted 1,4-benzoquinone (cyclohexa-2,5-diene-1,4-dione), and the ionic liquid is 1-butyl-3-methylimidazolium chloride.

In some preferred embodiments, the redox-active organic compound is hydroquinone (benzene-1,4-diol), which can be optionally substituted with 1 to 4, preferably 1 or 2, ($C_1$-$C_6$)alkyl groups; and/or optionally substituted with 1 to 4, preferably 1 or 2, ($C_1$-$C_6$)alkoxy groups; and the organic cation is imidazolium, which can be optionally substituted with 1 to 3 ($C_1$-$C_6$)alkyl groups, preferably with 2 ($C_1$-$C_6$)alkyl groups; the anion may be, for example, any anion as described herein; more preferably, the anion may be $Cl^-$. More preferably, in some embodiments, the redox-active organic compound is hydroquinone (benzene-1,4-diol), which is substituted with 1 or 2 ($C_1$-$C_6$)alkoxy groups, preferably 1 or 2 methoxy groups; and the organic cation is imidazolium, which can be optionally substituted with 1 to 3 ($C_1$-$C_6$)alkyl groups, preferably with 2 ($C_1$-$C_6$)alkyl groups; the anion may be, for example, any anion as described herein; still more preferably, the anion may be $Cl^-$. Even more preferably, the redox-active organic compound is 2-methoxy-hydroquinone, and the ionic liquid is 1-butyl-3-methylimidazolium chloride.

In some preferred embodiments, the redox-active organic compound is hydroquinone (benzene-1,4-diol), which can be optionally substituted with 1 to 4, preferably 1 or 2, ($C_1$-$C_6$)alkyl groups; and/or optionally substituted with 1 to 4, preferably 1 or 2, ($C_1$-$C_6$)alkoxy groups; and the organic cation is pyridinium, which can be optionally substituted with 1 to 3 ($C_1$-$C_6$)alkyl groups, preferably with 2 ($C_1$-$C_6$)alkyl groups; the anion may be, for example, any anion as described herein; more preferably, the anion may be $Cl^-$. More preferably, in some embodiments, the redox-active organic compound is hydroquinone (benzene-1,4-diol), which is substituted with 1 or 2 ($C_1$-$C_6$)alkoxy groups, preferably 1 or 2 methoxy groups; and the organic cation is pyridinium, which can be optionally substituted with 1 to 3 ($C_1$-$C_6$)alkyl groups, preferably with 2 ($C_1$-$C_6$)alkyl groups; the anion may be, for example, any anion as described herein; still more preferably, the anion may be $Cl^-$. Even more preferably, the redox-active organic compound is 2-methoxy-hydroquinone, and the ionic liquid is 1-butyl-3-methylpyridinium chloride. Even more preferably, the redox-active organic compound is 2-methoxy-hydroquinone, and the ionic liquid is 1-butyl-2-methylpyridinium chloride.

In some preferred embodiments, the redox-active organic compound is hydroquinone (benzene-1,4-diol), which can be optionally substituted with 1 to 4, preferably 1 or 2, ($C_1$-$C_6$)alkyl groups; and/or optionally substituted with 1 to 4, preferably 1 or 2, ($C_1$-$C_6$)alkoxy groups; and the organic cation is pyrrolidinium, which can be optionally substituted with 1 to 3 ($C_1$-$C_6$)alkyl groups, preferably with 2 ($C_1$-$C_6$)alkyl groups; the anion may be, for example, any anion as described herein; more preferably, the anion may be $Cl^-$. More preferably, in some embodiments, the redox-active organic compound is hydroquinone (benzene-1,4-diol), which is substituted with 1 or 2 ($C_1$-$C_6$)alkoxy groups, preferably 1 or 2 methoxy groups; and the organic cation is pyrrolidinium, which can be optionally substituted with 1 to 3 ($C_1$-$C_6$)alkyl groups, preferably with 2 ($C_1$-$C_6$)alkyl groups; the anion may be, for example, any anion as described herein; still more preferably, the anion may be $Cl^-$. Even more preferably, the redox-active organic compound is 2-methoxy-hydroquinone, and the ionic liquid is 1-butyl-1-methylpyrrolidinium chloride.

In some preferred embodiments, the redox-active organic compound is hydroquinone (benzene-1,4-diol), which can be optionally substituted with 1 to 4, preferably 1 or 2, ($C_1$-$C_6$)alkyl groups; and/or optionally substituted with 1 to 4, preferably 1 or 2, ($C_1$-$C_6$)alkoxy groups; and the organic cation is piperidinium, which can be optionally substituted with 1 to 3 ($C_1$-$C_6$)alkyl groups, preferably with 2 ($C_1$-$C_6$)alkyl groups; the anion may be, for example, any anion as described herein; more preferably, the anion may be $Cl^-$. More preferably, in some embodiments, the redox-active organic compound is hydroquinone (benzene-1,4-diol), which is substituted with 1 or 2 ($C_1$-$C_6$)alkoxy groups, preferably 1 or 2 methoxy groups; and the organic cation is piperidinium, which can be optionally substituted with 1 to 3 ($C_1$-$C_6$)alkyl groups, preferably with 2 ($C_1$-$C_6$)alkyl groups; the anion may be, for example, any anion as described herein; still more preferably, the anion may be $Cl^-$. Even more preferably, the redox-active organic compound is 2-methoxy-hydroquinone, and the ionic liquid is 1-methyl-1-propylpiperidinium chloride.

In some preferred embodiments, the redox-active organic compound is anthraquinone (anthracene-9,10-dione), which can be optionally substituted with 1 to 4, preferably 1 or 2, ($C_1$-$C_6$)alkyl groups, and/or optionally substituted with

1 to 4, preferably 1 or 2, ($C_1$-$C_6$)alkoxy groups, and/or optionally substituted with 1 to 4, preferably 1 or 2, hydroxy groups; and the organic cation is imidazolium, which can be optionally substituted with 1 to 3 ($C_1$-$C_6$)alkyl groups, preferably with 2 ($C_1$-$C_6$)alkyl groups; the anion may be, for example, any anion as described herein; more preferably, the anion may be $Cl^-$. More preferably, in some embodiments, the redox-active organic compound is anthraquinone (anthracene-9,10-dione) substituted with 1 to 4 hydroxy groups, preferably with 1 to 3 hydroxy groups, more preferably with 2 hydroxy groups; and the organic cation is imidazolium, which can be optionally substituted with 1 to 3 ($C_1$-$C_6$)alkyl groups, preferably with 2 ($C_1$-$C_6$)alkyl groups; the anion may be, for example, any anion as described herein; more preferably, the anion may be $Cl^-$. Even more preferably, the redox-active organic compound is 2,6-dihydroxyanthraquinone, and the ionic liquid is 1-butyl-3-methylimidazolium chloride.

Preferably, the redox active organic compound is a phthalimide. The term "a phthalimide", as used herein, refers to a member of the compound class of phthalimides. The phthalimide may be unsubstituted phthalimide, or a substituted phthalimide. More preferably, the phthalimide is unsubstituted phthalimide, which is also known as just "phthalimide" and which has the IUPAC name 1*H*-isoindole-1,3(2*H*)-dione. Optionally, in alternative embodiments, phthalimide (1*H*-isoindole-1,3(2*H*)-dione) can be substituted with 1 to 4, preferably 1 or 2, ($C_1$-$C_6$)alkyl groups; and/or optionally, phthalimide (1*H*-isoindole-1,3(2*H*)-dione) can be substituted with 1 to 4, preferably 1 or 2, ($C_1$-$C_6$)alkoxy groups; and/or optionally, phthalimide (1*H*-isoindole-1,3(2*H*)-dione) can be substituted with 1 to 4 hydroxy groups.

In some preferred embodiments, the redox-active organic compound is phthalimide (1*H*-isoindole-1,3(2*H*)-dione), which can be optionally substituted with 1 to 4, preferably 1 or 2, ($C_1$-$C_6$)alkyl groups, and/or optionally substituted with 1 to 4, preferably 1 or 2, ($C_1$-$C_6$)alkoxy groups; and/or optionally substituted with 1 to 4, preferably 1 or 2, hydroxy groups; and the organic cation is imidazolium, which can be optionally substituted with 1 to 3 ($C_1$-$C_6$)alkyl groups, preferably with 2 ($C_1$-$C_6$)alkyl groups; the anion may be, for example, any anion as described herein; more preferably, the anion may be $Cl^-$. More preferably, in some embodiments, the redox-active organic compound is unsubstituted phthalimide (1H-isoindole-1,3(2*H*)-dione); and the organic cation is imidazolium, which can be optionally substituted with 1 to 3 ($C_1$-$C_6$)alkyl groups, preferably with 2 ($C_1$-$C_6$)alkyl groups; the anion may be, for example, any anion as described herein; more preferably, the anion may be $Cl^-$. Even more preferably, the redox-active organic compound is unsubstituted phthalimide (1*H*-isoindole-1,3(2*H*)-dione), and the ionic liquid is 1-butyl-3-methylimidazolium chloride.

Preferably, the redox active compound is a phthalocyanine. More preferably, the phthalocyanine is $Na_4$[MeTsPc], which has the following formula and is described, e.g., in Z. Huang et al., ACS Appl. Energy Mater. 2019, 2, 3773-3779:

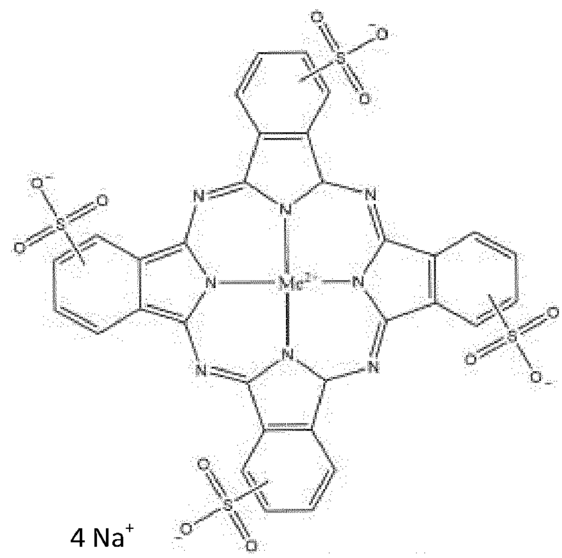

$MeTsPc^{4-}$ Me = Ni, Cu.

Preferably, the redox active compound is a porphyrine.

Any redox-active organic compound and any ionic liquid, as described herein, can be combined with each other. Any redox-active organic compound, any organic cation and any anion, as described herein, can be combined with each other.

In some embodiments, a composition as described herein is a liquid composition. Preferably, a composition as described herein is liquid at room temperature. "Room temperature", whenever used throughout the present specification, refers to a temperature of about +20°C. As used herein, the term "about" or "approximately" followed by a temperature value means +/- 5°C, preferably +/- 2°C and more preferably +/- 1°C around that temperature value.

Preferably, in any one of the compositions described herein, the concentration of the redox active organic compound is 0.5 mol/L or more. More preferably, the concentration of the redox active organic compound is 1 mol/L or more. Still more preferably, the concentration of the redox active organic compound is 2 mol/L or more. Still more preferably, the concentration of the redox active organic compound is 3 mol/L or more. Still more preferably, the concentration of the redox active organic compound is 4 mol/L or more. Still more preferably, the concentration of the redox active organic compound is 5 mol/L or more. Still more preferably, the concentration of the redox active organic compound is 6 mol/L or more. In some embodiments, the concentration of the redox active organic compound is 10 mol/L or less. In some embodiments, the concentration of the redox active organic compound is 9 mol/L or less. In some embodiments, the concentration of the redox active organic compound is 8 mol/L or less. In some embodiments, the concentration of the redox active organic compound is 7 mol/L or less.

Preferably, in some embodiments, any one of the compositions described herein does not contain additional salt. Accordingly, as the cation and the anion of the ionic liquid play a role as charge carriers, it is not necessary to add additional supporting salts to the electrolyte. Omitting additional salt is also beneficial for an improvement of the energy density. However, in some embodiments, it is not excluded that additional salt is present in the composition. As an illustrative example, additional salt may be present at low concentration.

As indicated herein, the inventors have surprisingly found that a composition as described herein can be liquid over a broad temperature range. Accordingly, in some embodiments, the composition may be a liquid composition. In particular, the composition may be liquid at room temperature (about 20°C). Without wishing to be bound by any theory, it may be assumed that, in some embodiments, a composition comprising the ionic liquid and the redox-active organic compound may be capable to form a eutectic system. As known to a person skilled in the art, a "eutectic system" is a homogeneous mixture of substances that melts or solidifies at a single temperature that is lower than the melting point of any of the constituents. This temperature is known as the "eutectic temperature", and is the lowest possible melting temperature over all of the mixing ratios for the involved component species. On a phase diagram, the eutectic temperature is seen as the eutectic point. Accordingly, within the context of the present disclosure, a "eutectic system", when present, would be defined by a specific ratio of the ionic liquid, a specific ratio of the redox-active organic compound, and the corresponding eutectic temperature. In one embodiment, the composition may be a eutectic system. However, it is noted that, when a composition is capable to form a eutectic system, the eutectic system represents only a specific embodiment of the composition, and the composition of the present disclosure also includes any compositions which do not have the eutectic mixing ratios. Accordingly, the compositions described herein are not limited to a specific eutectic mixing ratio, but may rather contain the ionic liquid and the redox-active organic compound in any mixing ratio. It is also noted that it may not be even necessary that a composition comprising an ionic liquid and a redox-active organic compound, as described herein, is capable to form a eutectic system.

The present invention also relates to a method of preparing a composition suitable for use as an electrolyte in a battery, comprising mixing of at least one ionic liquid comprising an organic cation in the liquid or molten state, and at least one redox-active organic compound, wherein the composition is free of solvent. Preferably, the composition is any composition as described herein. In preferred embodiments, in order to prepare a composition which is free of solvent, the components can be employed free of solvent, and using or adding solvent during or after the preparation can be avoided. In some embodiments, the method of preparing the composition may be carried out under an inert atmosphere (e.g. under argon or nitrogen gas). In some embodiments, the mixing of the at least one ionic liquid comprising an organic cation and of the at least one redox-active organic compound may be carried out under an inert atmosphere (e.g. under argon or nitrogen gas).

In some embodiments, the method may comprise melting of the ionic liquid by heating. In particular, heating is preferred when the ionic liquid (or the ionic salt) is not liquid at room temperature. Optionally, the method may further comprise cooling of the composition. Preferably, the composition may be cooled to room temperature.

The present invention also relates to a composition suitable for use as an electrolyte in a battery, which is obtainable or being obtained by any one of the methods of preparing a composition suitable for use as an electrolyte in a battery described herein.

The present invention also relates to a use of a composition as described herein as an electrolyte in a battery. The battery may be any suitable battery known to a person skilled in the art, e.g. any battery as described herein. As an illustrative, non-limiting example, the battery may be a static cell. The battery may be a flow cell. Preferably, the battery is a redox flow battery, which comprises a composition as described herein. Optionally, the battery, in particular the redox flow battery, may further comprise an anion exchange membrane and/or a cation exchange membrane.

The present invention also relates to a battery comprising a composition as described herein. The battery may be any suitable battery known to a person skilled in the art, e.g. any battery as described herein. The battery may further comprise an ion exchange membrane, for example, an anion exchange membrane and/or a cation exchange membrane; preferably, the battery comprises an anion exchange membrane. The battery may further comprise a counter electrolyte. The counter electrolyte may comprise an organic or inorganic redox active material. The counter electrolyte may comprise an ion of a metal selected from the group consisting of V, Zn, Cu, Al, Fe and any combination thereof. The ion may be

dissolved in an inorganic acid or in an ionic liquid. The battery may be a static cell or a flow cell. Preferably, the battery is a redox flow battery. The battery may be rechargeable.

The present invention is also characterized by the following items:

1. A composition suitable for use as an electrolyte in a battery, comprising (i) at least one ionic liquid comprising an organic cation and (ii) at least one redox active organic compound, wherein the composition is free of solvent.
2. The composition according to item 1, wherein the ionic liquid comprises an anion and a larger organic cation.
3. The composition according to item 2, wherein the anion is selected from the group consisting of a halogenide (e.g., $Cl^-$, $Br^-$, $I^-$), nitrate ($NO_3^-$), an alkyl sulfonate (e.g., methane sulfonate), hexafluorophosphate, tetrafluoroborate, bis(trifluoromethylsulfonylamide) and any combination thereof.
4. The composition according to any one of items 1 to 3, wherein the organic cation is selected from the group consisting of imidazolium, pyridinium, piperidinium, pyrrolidinium, guanidinium, tetra-($C_1$-$C_6$)alkylammonium and any combination thereof, wherein imidazolium, pyridinium, piperidinium, pyrrolidinium or guanidinium can be optionally substituted with 1 to 3 ($C_1$-$C_6$)alkyl groups.
5. The composition according to item 4, wherein the organic cation is imidazolium, which can be optionally substituted with 1 to 3 ($C_1$-$C_6$)alkyl groups.
6. The composition according to item 5, wherein the ionic liquid has the following formula:

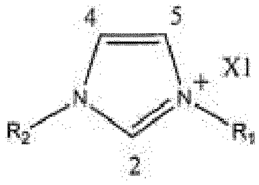

,

wherein $R_1$ and $R_2$ are each independently a ($C_1$-$C_6$)alkyl group and X1 is an anion.
7. The composition according to item 6, wherein the anion is selected from the group consisting of a halogenide (e.g., $Cl^-$, $Br^-$, $I^-$), nitrate ($NO_3^-$), an alkyl sulfonate (e.g. methane sulfonate), hexafluorophosphate, tetrafluoroborate, bis(trifluoromethylsulfonylamide) and any combination thereof.
8. The composition according to item 6 or 7, wherein $R_1$ is butyl and $R_2$ is methyl.
9. The composition according to item 6 or 7, wherein $R_1$ is ethyl and $R_2$ is methyl.
10. The composition according to item 8, wherein the ionic liquid is 1-butyl-3-methylimidazolium chloride.
11. The composition according to item 9, wherein the ionic liquid is 1-ethyl-3-methylimidazolium chloride.
12. The composition according to item 4, wherein the organic cation is pyridinium, which can be optionally substituted with 1 to 3 ($C_1$-$C_6$)alkyl groups.
13. The composition according to item 12, wherein the ionic liquid is 1-butyl-2-methylpyridinium chloride.
14. The composition according to item 12, wherein the ionic liquid is 1-butyl-3-methylpyridinium chloride.
15. The composition according to item 4, wherein the organic cation is pyrrolidinium, which can be optionally substituted with 1 to 3 ($C_1$-$C_6$)alkyl groups.
16. The composition according to item 15, wherein the ionic liquid is 1-butyl-1-methylpyrrolidinium chloride.
17. The composition according to item 4, wherein the organic cation is piperidinium, which can be optionally substituted with 1 to 3 ($C_1$-$C_6$)alkyl groups.
18. The composition according to item 17, wherein the ionic liquid is 1-methyl-1-propylpiperidinium chloride.
19. The composition according to any one of the preceding items, wherein the redox active organic compound is selected from the group consisting of an organic radical, a quinone, a phthalimide, a phthalocyanine, a porphyrine, and any combination thereof.
20. The composition according to item 19, wherein the redox active organic compound is an organic radical.
21. The composition according to item 20, wherein the organic radical is 2,2,6,6-tetramethylpiperidinyloxyl, which can be optionally substituted with 1 to 3 hydroxy groups.
22. The composition according to item 21, wherein the organic radical is 2,2,6,6-tetramethylpiperidinyloxyl (TEMPO) or 4-hydroxy-2,2,6,6-tetramethylpiperidinyloxyl (4-hydroxy-TEMPO).
23. The composition according to item 19, wherein the redox active organic compound is a quinone.
24. The composition according to item 23, wherein the quinone is 1,4-benzoquinone, which can be optionally substituted with 1 to 4 ($C_1$-$C_6$)alkyl groups and/or optionally substituted with 1 to 4 ($C_1$-$C_6$)alkoxy groups.
25. The composition according to item 24, wherein the quinone is unsubstituted 1,4-benzoquinone.
26. The composition according to item 23, wherein the quinone is hydroquinone, which can be optionally substituted with 1 to 4 ($C_1$-$C_6$)alkyl groups and/or optionally substituted with 1 to 4 ($C_1$-$C_6$)alkoxy groups.

27. The composition according to item 26, wherein the quinone is 2-methoxy-hydroquinone.

28. The composition according to item 23, wherein the quinone is anthraquinone, which can be optionally substituted with 1 to 4 ($C_1$-$C_6$)alkyl groups and/or optionally substituted with 1 to 4 ($C_1$-$C_6$)alkoxy groups and/or optionally substituted with 1 to 4 hydroxy groups.

29. The composition according to item 28, wherein the quinone is 2,6-dihydroxyanthraquinone.

30. The composition according to item 19, wherein the redox active organic compound is phthalimide, which can be optionally substituted with 1 to 4 ($C_1$-$C_6$)alkyl groups and/or optionally substituted with 1 to 4 ($C_1$-$C_6$)alkoxy groups and/or optionally substituted with 1 to 4 hydroxy groups.

31. The composition according to item 30, wherein the redox active organic compound is unsubstituted phthalimide.

32. The composition according to item 19, wherein the redox active compound is a phthalocyanine.

33. The composition according to item 32, wherein the redox active compound is

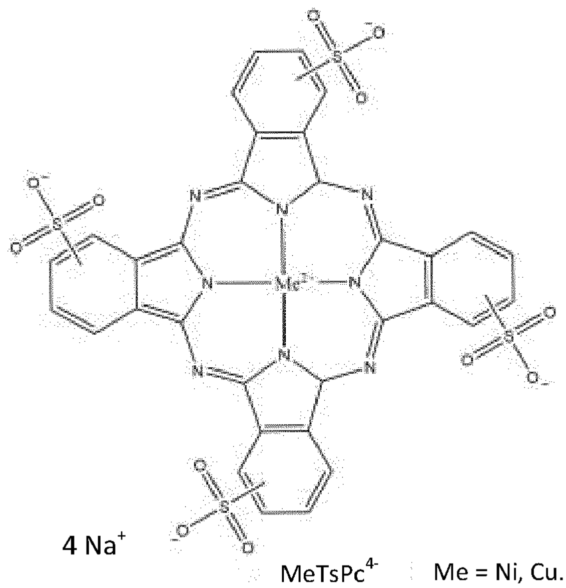

4 $Na^+$

$MeTsPc^{4-}$ Me = Ni, Cu.

34. The composition according to item 19, wherein the redox active compound is a porphyrine.

35. The composition according to any one of the preceding items, wherein the composition is liquid at room temperature (about 20 °C).

36. The composition according to any one of the preceding items, wherein the concentration of the redox active organic compound is 0.5 mol/L or more, preferably 1 mol/L or more, more preferably 2 mol/L or more, even more preferably 3 mol/L or more, even more preferably 4 mol/ L or more, even more preferably 5 mol/ L or more, even more preferably 6 mol/L or more.

37. The composition according to any one of the preceding items, wherein the composition does not contain additional salt.

38. The composition according to any one of the preceding items, wherein the composition forms a eutectic system and is in liquid form at room temperature.

39. A method of preparing a composition suitable for use as an electrolyte in a battery, preferably according to any one of the preceding claims, comprising mixing of at least one ionic liquid comprising an organic cation in the molten state and at least one redox-active organic compound, wherein the composition is free of solvent.

40. The method according to item 39, comprising the melting of the ionic liquid by heating.

41. The method according to item 39 or 40, further comprising cooling of the composition, preferably to room temperature (about 20 °C).

42. A composition suitable for use as an electrolyte in a battery, obtainable by a method according to any one of items 39 to 41.

43. Use of a composition according to any one of items 1 to 38 and 42 as an electrolyte in a battery.

44. The use according to item 43, wherein the battery is a static cell or a flow cell.

45. The use according to item 44, wherein the battery is a redox flow battery.

46. A battery comprising a composition according to any one of items 1 to 38 and 42.

47. The battery according to item 46, wherein the battery further comprises an ion exchange membrane, preferably an anion exchange membrane.

48. The battery according to item 46 or 47, wherein the battery further comprises a counter electrolyte comprising

an organic or inorganic redox active material.

49. The battery according to item 48, wherein the counter electrolyte comprises an ion of a metal selected from the group consisting of V, Zn, Cu, Al, Fe and any combination thereof.

50. The battery according to item 49, wherein the ion is dissolved in an inorganic acid or in an ionic liquid.

51. The battery according to any one of items 47 to 50, wherein the battery is a static cell or a flow cell.

52. The battery according to item 51, wherein the battery is a redox flow battery.

53. The battery according to any one of items 46 to 52, wherein the battery is rechargeable.

It is noted that as used herein, the singular forms "a", "an", and "the", include plural references unless the context clearly indicates otherwise. Thus, for example, reference to "a reagent" includes one or more of such different reagents and reference to "the method" includes reference to equivalent steps and methods known to those of ordinary skill in the art that could be modified or substituted for the methods described herein.

Unless otherwise indicated, the term "at least" preceding a series of elements is to be understood to refer to every element in the series. Those skilled in the art will recognize, or be able to ascertain using no more than routine experimentation, many equivalents to the specific embodiments of the invention described herein. Such equivalents are intended to be encompassed by the present invention.

The term "and/or" wherever used herein includes the meaning of "and", "or" and "all or any other combination of the elements connected by said term".

The term "less than" or in turn "greater than" does not include the concrete number. For example, "less than 20" means less than the number indicated. Similarly, "greater than" means greater than the indicated number, e.g., greater than 80 % means greater than the indicated number of 80 %.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step. When used herein the term "comprising" can be substituted with the term "containing" or "including" or sometimes when used herein with the term "having".

When used herein, "consisting of'' excludes any element, step, or ingredient not specified in the claim element. When used herein, "consisting essentially of" does not exclude materials or steps that do not materially affect the basic and novel characteristics of the claim. In each instance herein any of the terms "comprising", "consisting essentially of" and "consisting of" may be replaced with either of the other two terms.

The term "including" means "including but not limited to". "Including" and "including but not limited to" are used interchangeably.

When used herein, the term "about" is understood to mean that there can be variation in the respective value or range (such as pH, concentration, percentage, molarity, time etc.) that can be up to 5 %, up to 10 % of the given value. For example, if a formulation comprises about 5 mg/ml of a compound, this is understood to mean that a formulation can have between 4.5 and 5.5 mg/ml.

It should be understood that this invention is not limited to the particular methodology, protocols, material, reagents, and substances, etc., described herein and as such can vary. The terminology used herein is for the purpose of describing particular embodiments only and is not intended to limit the scope of the present invention, which is defined solely by the claims.

All publications cited throughout the text of this specification (including all patents, patent application, scientific publications, instructions, etc.), whether supra or infra, are hereby incorporated by reference in their entirety. Nothing herein is to be construed as an admission that the invention is not entitled to antedate such disclosure by virtue of prior invention. To the extent the material incorporated by reference contradicts or is inconsistent with this specification, the specification will supersede any such material.

The content of all documents and patent documents cited herein is incorporated by reference in their entirety.

A better understanding of the present invention and of its advantages will be had from the following examples, offered for illustrative purposes only. The examples are not intended to limit the scope of the present invention in any way.

## EXAM PLES

### Materials

1-butyl-3-methylimidazolium chloride (BMImCl, ≥ 98.0%, water content below 1% by weight), 4-hydroxy-2,2,6,6-tetramethylpiperidine-1-oxyl (4-hydroxy-TEMPO, 97%), 1,4-benzoquinone (≥ 98.0%), phthalimide (≥ 99%), 2,6-dimethoxyhydroquinone (≥ 97.0%), 2,6-dihydroxyanthraquinone (≥ 97.0%) were received from Sigma Aldrich. 2-methoxylhydroquinone (≥ 97.0%) were received from Alfa Aesar. All chemicals were received in sealed containers and used without further purification. All chemicals were stored in an argon-filled glovebox with water and oxygen levels of each below

0.1 ppm. The difference of the values for the purities, e.g., "≥ 98.0%", of the chemicals to 100% includes all impurities which may be present in the respective chemical, as customary.

The commercial Fumasep® FAA-3-30 anion exchange membrane (Fumatech, Germany) was used for flow cell tests. The membrane was soaked in 1 M KOH at 40 °C for 10 min at first, then in 0.5 M NaCl at room temperature for 30 min, and finally washed with distilled water.

**Electrochemical tests**

The cyclic voltammetry (CV) measurements were carried out with a three electrode cell using glassy carbon as working electrode, a platinum foil as counter electrode, and a silver wire as a quasi-reference electrode.

An electrochemical cell was assembled by sandwiching one piece of FAA-3-30 membrane between two symmetric graphite felt electrodes (with a surface area of 4 $cm^2$ and a thickness of 1.5 mm). The graphite felt (Sigracell® Carbon) was first immersed in 1 M $H_2SO_4$ for 24 h and then thermally treated at 400 °C for 24 h in static air. The galvanostatic charge/discharge cycling of the cell was performed under constant current using a Biologic VMP300 potentiostat.

**Example 1 (Solvent-free composition comprising BMImCl and 4-hydroxy-TEMPO)**

The preparation of the composition was carried out in an argon-filled glovebox with water and oxygen levels of each below 0.1 ppm. 1.0802 g BMImCl was heated at 80 °C for 4 h to form a liquid. The solubilities of organic materials were measured by adding the different amounts of organic materials into the molten BMImCl until no further materials can be dissolved under stirring. For instance, 3.4934 g 4-hydroxy-TEMPO was stepwise added into molten BMImCl and kept at 80 °C for 4 h to obtain a mixture of 4.7 M 4-hydroxy-TEMPO in BMImCl, as shown in **Fig. 1.** The liquid mixtures were then cooled down to room temperature. No precipitates or phase separation were observed at room temperature and the mixtures remain as liquid form with high viscosity. The final concentration of active species was calibrated based on the final volume of the solutions. A mixture of 4.4 M 4-hydroxy-TEMPO in BMImCl showed a viscosity of 0.94 Pa s at room temperature, and 0.039 Pa s at 80 °C.

The content of residual solvent in the mixture of Example 1 was calculated from the residual water content of the BMImCl, which is below 1% by weight, and the amounts of BMImCl and 4-hydroxy-TEMPO employed in the composition. Accordingly, the maximum possible water content in the mixture of Example 1 was calculated to amount to below 0.24% by weight. In more detail, the calculation was carried out, as follows:

According to the technical datasheet provided by the supplier, the water content of the BMImCl is below 1% by weight. In Example 1, 1.0802 g BMImCl was used, and 3.4934 g of 4-hydroxy-TEMPO was used. Thus, the maximum residual solvent content is:

$$1.0802\ g \times 1\% / (1.0802\ g + 3.4934\ g) = 0.236\%$$

Accordingly, the maximum residual solvent content in the composition of Example 1 is about 0.24% by weight.

The CV curves of 0.02 M 4-hydroxy-TEMPO in BMImCl are shown in **Fig. 2a.** Reversible redox peaks were observed with averaged redox potential of 1.1 V vs. Ag.

The electrochemical cycling performance was performed in a static cell between the potential range of 0.6 and 1.4 V at 55 °C and a current density of 1.25 mA $cm^{-2}$, with electrolyte volume of 0.6 mL for both catholyte and anolyte. The catholyte consists of 0.8 M 4-hydroxy-TEMPO in BMImCl. The anolyte is 0.8 M $V^{3+}$ in 2 M $H_2SO_4$, which was obtained through electrochemical reduction of the commercial vanadium electrolyte of $V^{3.5+}$ (1.6 M, $VO^{2+}/V^{3+}$, 1:1, GfE Metalle und Materialien GmbH, Germany) and then diluted with 2 M $H_2SO_4$. **Fig. 2b** shows the typical discharge profiles of the cell with an averaged discharge voltage of about 1.12 V. **Fig. 2c** shows that the cycling stability over 20 cycles. From the 4$^{th}$ to 20$^{th}$ cycles, the cell showed relatively stable performance.

Further, a differential scanning calorimetry (DSC) curve was measured of a composition comprising 3.9 M 4-hydroxy-TEMPO in BMImCl. The DSC curve of the composition is depicted in **Fig. 7.** As can be seen from the DSC curve **b,** the composition comprising 3.9 M 4-hydroxy-TEMPO in BMImCl is liquid over a broad temperature range between about -50°C and +100°C. For comparison, also DSC curves **a** are depicted for heating and cooling of 4-hydroxy-TEMPO alone, i.e. in the unmixed state. The physicochemical properties of BMImCl and 4-hydroxy-TEMPO are provided in the following table:

**Table 1** Physicochemical properties of BMImCl and 4-hydroxy-TEMPO.

| | Molecular weight (g $mol^{-1}$) | ρ ($gcm^{-3}$) | $T_m$ / °C | $T_{onset}$/°C |
|---|---|---|---|---|
| [BMIM][Cl] | 174.67 | 1.08 | 70 | 254 |
| 4-hydroxy-TEMPO | 172.24 | 1.04 | 69-71 | |

Also, thermal stability of a composition comprising BMImCl and 4-hydroxy-TEMPO was tested. For this purpose, the composition was stored at 80°C for 0 h, 1.0 h, 1.5 h, 3.0 h, and 15.5 h, and the UV-vis spectra of the samples were measured. The UV-vis spectra are depicted in **Fig. 8.** As can be seen, the UV-vis spectra are almost identical for the different storage times. Accordingly, the composition exhibits good thermal stability. For comparison, the lower curve shows the UV-vis spectrum of BMImCl alone, i.e. in the unmixed state.

**Example 2 (Solvent-free composition comprising BMImCl and 2-methoxylhydroquinone)**

A procedure similar to **Example 1** was used to prepare the mixture of 2-methoxylhydroquinone in BMImCl. The preparation of the composition was carried out in an argon-filled glovebox with water and oxygen levels of each below 0.1 ppm. 2.8020 g 2-methoxylhydroquinone was added into 1 mL molten BMImCl and stirred at 80 °C for 4 h to obtain a mixture of 6 M 2-methoxylhydroquinone in BMImCl, as shown in **Fig. 1.** The 6 M mixture remains as homogenous liquid over 6 months at room temperature.

For the CV measurement, 0.01 M HCl was added into the mixture of 0.02 M 2-methoxyhydroquinone in BMImCl. As shown in **Fig. 3a,** the CV curves at a scan rate of 50 mV $s^{-1}$ are well overlapped with redox peaks located at 0.15 and 0.73 V vs. Ag, and an averaged redox potential of about 0.44 V.

The electrochemical cycling performance was performed using 0.3 mL of 4 M 2-methoxyhydroquinone in BMImCl as catholyte, and 10 mL of 1.6 M $V^{3+}$ in 2 M $H_2SO_4$ as anolyte (which was obtained as described in **Example 1).** The catholyte was used under static conditions, while the anolyte was circuited at a flow rate of 30 mL $min^{-1}$. The charge/discharge measurements were conducted between 0.6 and 1.2 V at 35 °C and 5 mA $cm^{-2}$, using the FAA-3-30 membrane. **Fig. 3b** and **Fig. 3c** shows the charge/discharge voltage profiles, the cycling stability and cycling efficiency, respectively. The cell showed fast capacity fade and low cycling efficiency during the first five cycles. Afterwards, the Columbic efficiency gradually increased in the following cycles up to 92% at the $50^{th}$ cycle. However, the voltage efficiency slowly decreased from 87% to 73%.

**Example 3 (Solvent-free composition comprising BMImCl and 1,4-benzoquinone)**

Similar to **Example 1,** 1.2972 g 1,4-benzoquinone was added into the molten BMImCl to obtain a mixture of 6.1 M 1,4-benzoquinone in BMImCl, as shown in **Fig. 1.** The preparation of the composition was carried out in an argon-filled glovebox with water and oxygen levels of each below 0.1 ppm. **Fig. 4** shows the CV curve of 0.2 M 1,4-benzoquinone in BMImCl at a scan rate of 50 mV $s^{-1}$ at room temperature. Two pairs of redox peaks were observed with a slight potential gap of about 0.25 V.

**Example 4 (Solvent-free composition comprising BMImCl and 2,6-dihydroxyanthraquinone)**

Similar to **Example 1,** 0.3603 g 2,6-dihydroxyanthraquinone was added to the molten BMImCl to obtain a mixture of 0.75 M 2,6-dihydroxyanthraquinone in BMImCl, as shown in **Fig. 1.** The preparation of the composition was carried out in an argon-filled glovebox with water and oxygen levels of each below 0.1 ppm. **Fig. 5** shows the CV curve of 0.05 M 2,6-dihydroxyanthraquinone in BMImCl at a scan rate of 50 mV $s^{-1}$ and room temperature. Reversible redox peaks located at -1.09 and -0.78 V vs. Ag were observed, with an average redox potential of -0.94 V vs. Ag.

**Example 5 (Solvent-free composition comprising BMImCl and phthalimide)**

Similar to **Example 1,** 0.515 g phthalimide was added into the molten BMImCl to obtain a mixture of 2.9 M phthalimide in BMImCl, as shown in **Fig. 1.** The preparation of the composition was carried out in an argon-filled glovebox with water and oxygen levels of each below 0.1 ppm. The electrochemical measurement was conducted in an Ar-filled glove box. **Fig. 6** shows the CV curve of 0.05 M phthalimide in BMImCl at a scan rate of 50 mV $s^{-1}$ and room temperature. Redox peaks located at -1.38 and -1.20 V vs. Ag were observed, with an average redox potential of -1.29 V vs. Ag.

**Example 6 (Solvent-free composition comprising 2-methoxylhydroquinone and different organic liquids)**

Further solubility tests have been carried out using 2-methoxylhydroquinone (from Alfa Aesar, 97%) and ionic liquids 1-butyl-3-methylpyridinium chloride (from Iolitec, 99%), 1-butyl-2-methylpyridinium chloride (from Iolitec, 99%), 1-butyl-1-methylpyrrolidinium chloride (from Iolitec, 99%), and 1-methyl-1-propylpiperidinium (from Iolitec, 99%). All chemicals were received in sealed containers and used without further purification. All chemicals were stored in an argon-filled glovebox with water and oxygen levels of each below 0.1 ppm. The difference of the values for the purities, e.g. "99%", of the chemicals to 100% includes all impurities which may be present in the respective chemical, as customary.

The ionic liquids 1-butyl-3-methylpyridinium chloride, 1-butyl-2-methylpyridinium chloride, 1-butyl-1-methylpyrrolidinium chloride, and 1-methyl-1-propylpiperidinium were received from Iolitec company, and employed without any further treatment prior to the use. Owing to the high melting point of the redox-active organic materials and ionic liquids, the redox-active organic material and the ionic liquids are each in crystalline form at room temperature. The preparations of the compositions were carried out in an argon-filled glovebox with water and oxygen levels of each below 0.1 ppm. The ionic liquids were mixed with 2-methoxylhydroquinone in a glove box under an inert gas atmosphere, and then heated in an oven at 80 °C for 4 h. The liquid compositions were then cooled down to room temperature. No precipitates or phase separation were observed at room temperature and the compositions remain in liquid form. Thereafter, additional organic material was gradually added to the liquid composition and heated in the oven at 80 °C for 4 h, until precipitates or phase separation was observed after cooling to room temperature. The final concentration of active species was calibrated based on the final volume of the solutions. For instance, 4.2 g 2-methoxylhydroquinone was stepwise added into 0.70 g 1-methyl-1-propylpiperidinium and kept at 80 °C for 4 h to obtain a composition. The final liquidity properties of the compositions were observed at room temperature. The results are shown in the following table.

**Table 2** Maximum concentrations and capacities of 2-methoxylhydroquinone in the tested ionic liquids.

| Molecules | Ionic Liquids | Melting pointing of ionic liquids / °C | Concentration / M | Volumetric Capacity / Ah $L^{-1}$ |
|---|---|---|---|---|
| 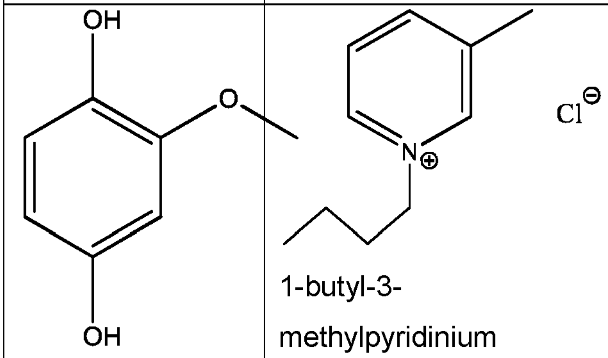 | 1-butyl-3-methylpyridinium chloride | 112 | 6.0 | 321.6 |
| 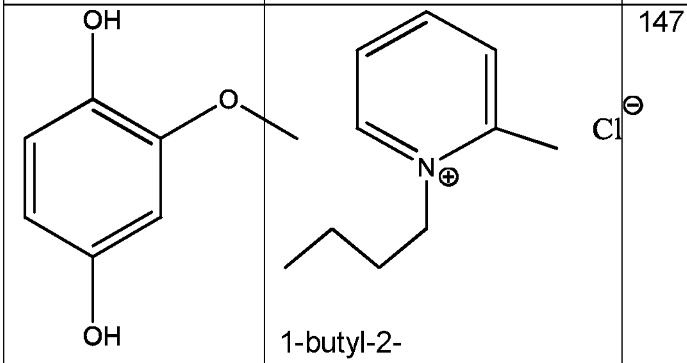 | 1-butyl-2-methylpyridinium chloride | 147 | 6.0 | 321.6 |
| 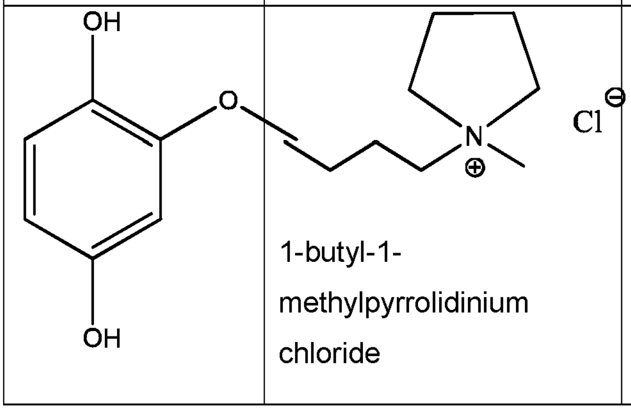 | 1-butyl-1-methylpyrrolidinium chloride | 198 | 6.0 | 321.6 |

| | | | | |
|---|---|---|---|---|
| 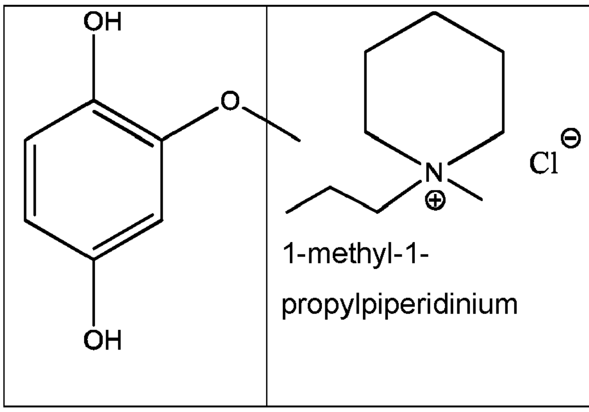 | 1-methyl-1-propylpiperidinium | >280 | 6.0 | 321.6 |

The foregoing examples show, e.g. (i) by preparing compositions comprising an ionic liquid and a redox-active organic compound, which are free of solvent and which are liquid, in particular at room temperature, (ii) by providing CV curves showing reversible redox peaks, and (iii) by testing stability, that the compositions described herein are suitable for use as electrolytes in a battery.

**Claims**

1. A composition suitable for use as an electrolyte in a battery, comprising (i) at least one ionic liquid comprising an organic cation and (ii) at least one redox active organic compound, wherein the composition is free of solvent.

2. The composition according to claim 1, wherein the ionic liquid comprises an anion and a larger organic cation.

3. The composition according to claim 2, wherein the anion is selected from the group consisting of a halogenide (e.g., $Cl^-$, $Br^-$, $I^-$), nitrate ($NO_3^-$), an alkyl sulfonate (e.g., methane sulfonate), hexafluorophosphate, tetrafluoroborate, bis(trifluoromethylsulfonylamide) and any combination thereof.

4. The composition according to any one of claims 1 to 3, wherein the organic cation is selected from the group consisting of imidazolium, pyridinium, piperidinium, pyrrolidinium, guanidinium, tetra-($C_1$-$C_6$)alkylammonium and any combination thereof, wherein imidazolium, pyridinium, piperidinium, pyrrolidinium or guanidinium can be optionally substituted with 1 to 3 ($C_1$-$C_6$)alkyl groups.

5. The composition according to any one of the preceding claims, wherein the redox active organic compound is selected from the group consisting of a quinone, an organic radical, a phthalimide, a phthalocyanine, a porphyrine, and any combination thereof.

6. The composition according to any one of the preceding claims, wherein the composition is liquid at room temperature (about 20 °C).

7. The composition according to any one of the preceding claims, wherein the concentration of the redox active organic compound is 0.5 mol/L or more, preferably 1 mol/L or more, more preferably 2 mol/L or more, even more preferably 3 mol/L or more, even more preferably 4 mol/ L or more, even more preferably 5 mol/ L or more, even more preferably 6 mol/L or more.

8. The composition according to any one of the preceding claims, wherein the composition does not contain additional salt.

9. A method of preparing a composition suitable for use as an electrolyte in a battery, preferably according to any one of the preceding claims, comprising mixing of at least one ionic liquid comprising an organic cation in the molten state and at least one redox-active organic compound, wherein the composition is free of solvent.

10. The method according to claim 9, comprising the melting of the ionic liquid by heating, optionally further comprising cooling of the composition, preferably to room temperature (about 20 °C).

**11.** Use of a composition according to any one of claims 1 to 8 as an electrolyte in a battery.

**12.** The use according to claim 11, wherein the battery is a redox flow battery.

**13.** A battery comprising a composition according to any one of claims 1 to 8.

**14.** The battery according to claim 13, wherein the battery is a redox flow battery.

**15.** The battery according to claim 13 or 14, wherein the battery is rechargeable.

Figure 1

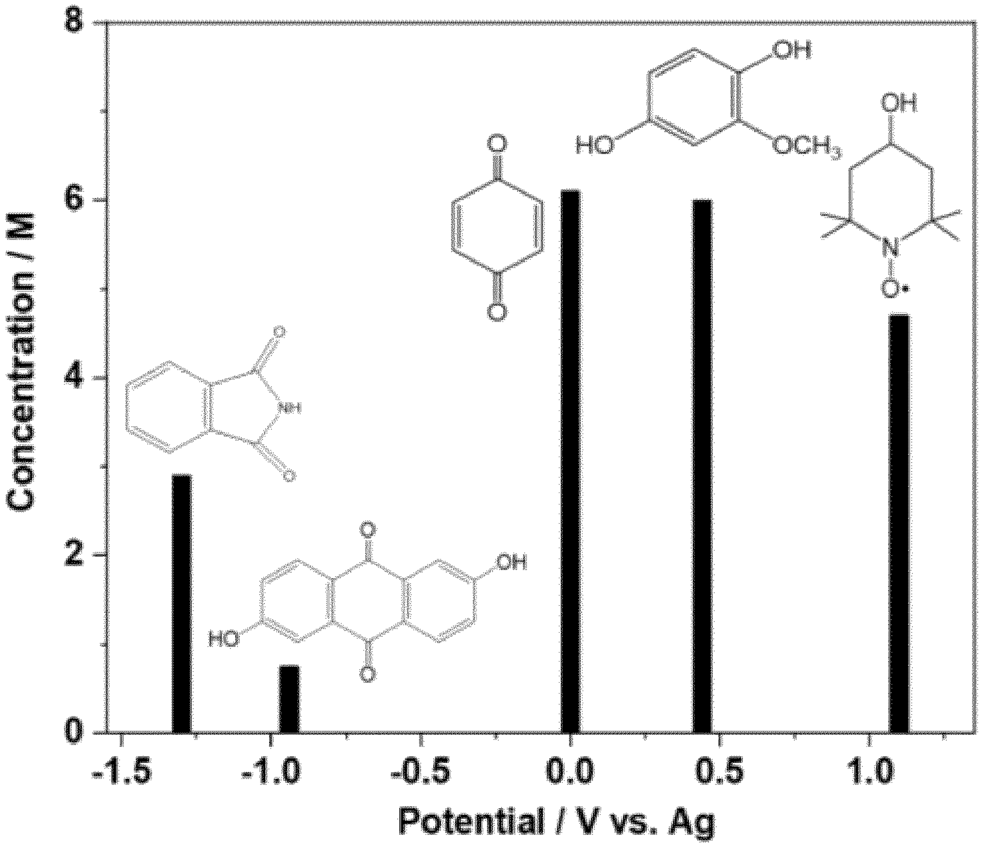

Figure 2

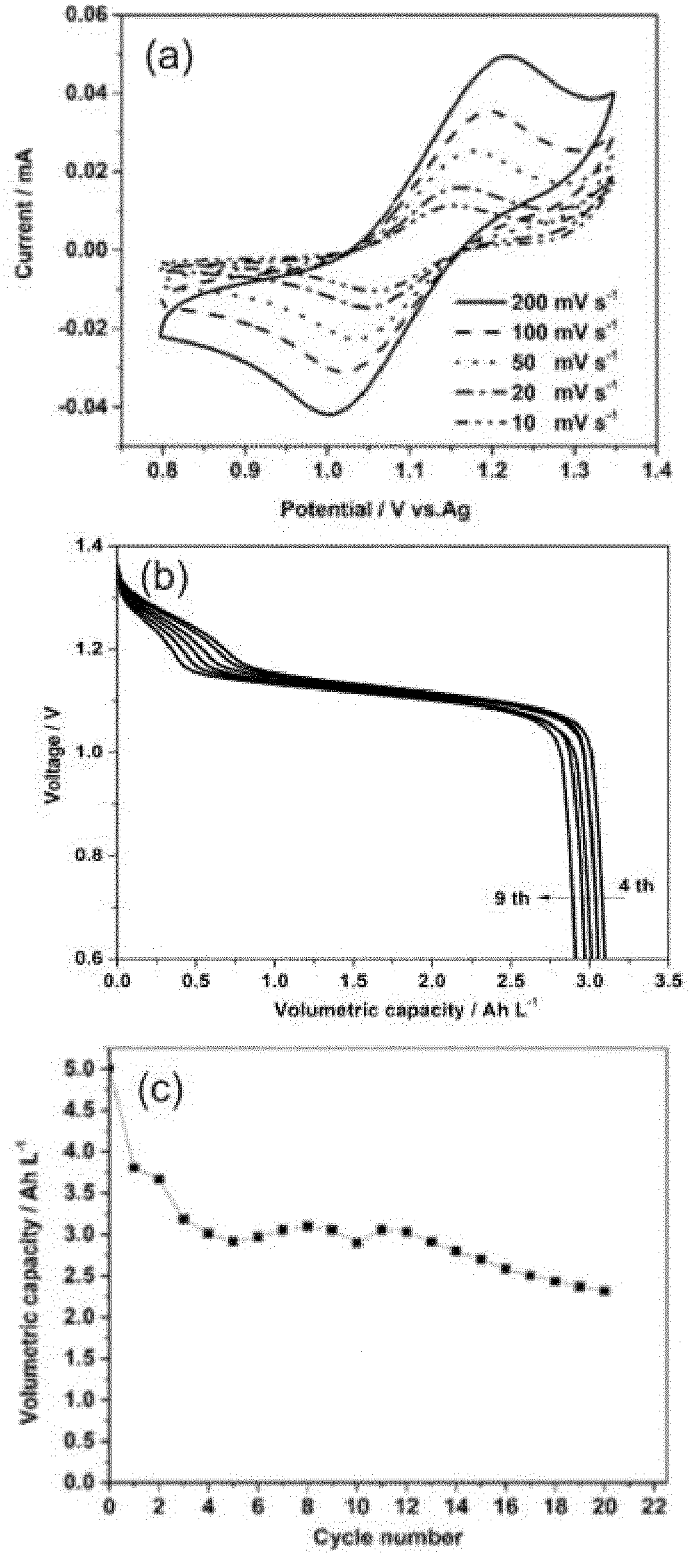
(a)
0.06
0.04
0.02
0.00
-0.02
-0.04
Current / mA
0.8
0.9
1.0
1.1
1.2
1.3
1.4
Potential / V vs.Ag
200 mV s-1
100 mV s-1
50 mV s-1
20 mV s-1
10 mV s-1
(b)
1.4
1.2
1.0
0.8
0.6
Voltage / V
9 th
4 th
0.0
0.5
1.0
1.5
2.0
2.5
3.0
3.5
Volumetric capacity / Ah L-1
(c)
5.0
4.5
4.0
3.5
3.0
2.5
2.0
1.5
1.0
0.5
0.0
Volumetric capacity / Ah L-1
0
2
4
6
8
10
12
14
16
18
20
22
Cycle number

Figure 3

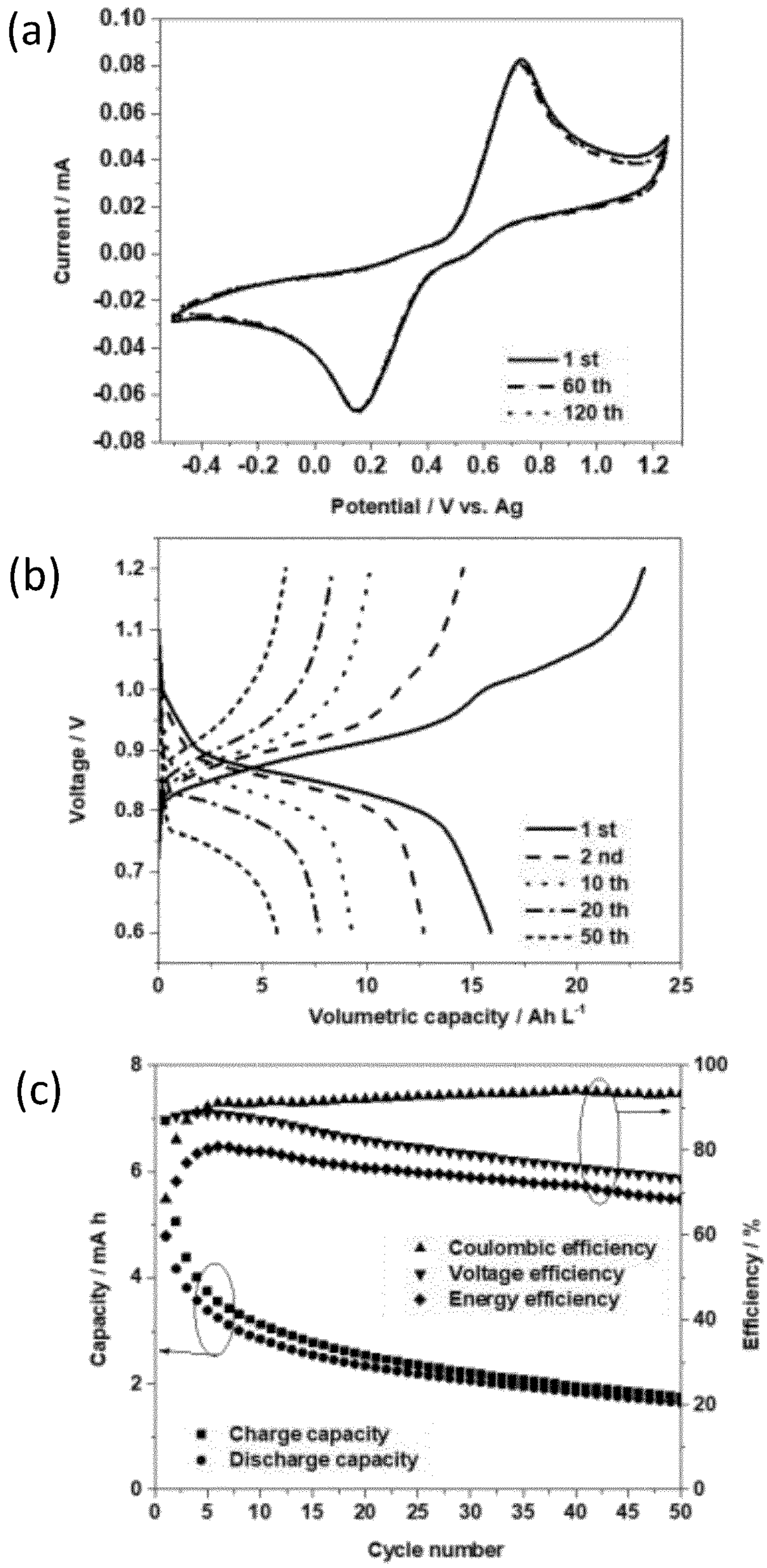
(a)
Current / mA
Potential / V vs. Ag
1 st
60 th
120 th
(b)
Voltage / V
Volumetric capacity / Ah L-1
1 st
2 nd
10 th
20 th
50 th
(c)
Capacity / mA h
Efficiency / %
Cycle number
Coulombic efficiency
Voltage efficiency
Energy efficiency
Charge capacity
Discharge capacity

Figure 4

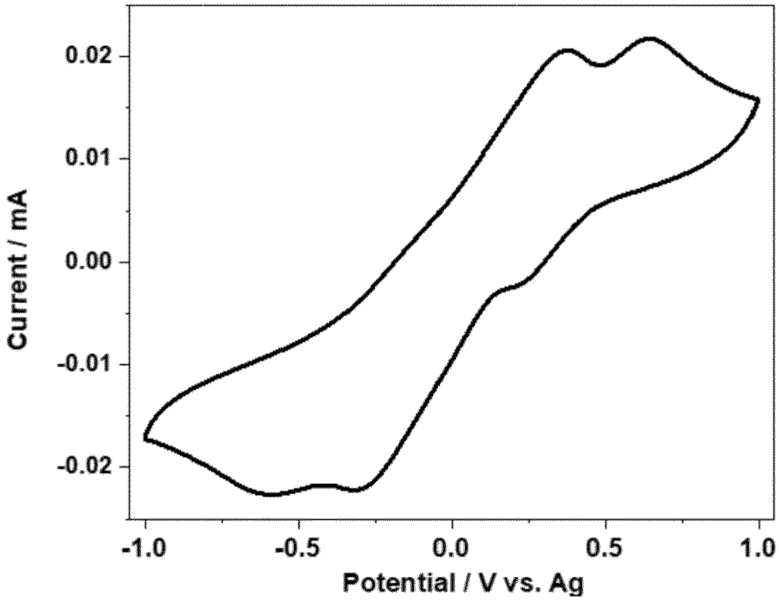


Figure 5

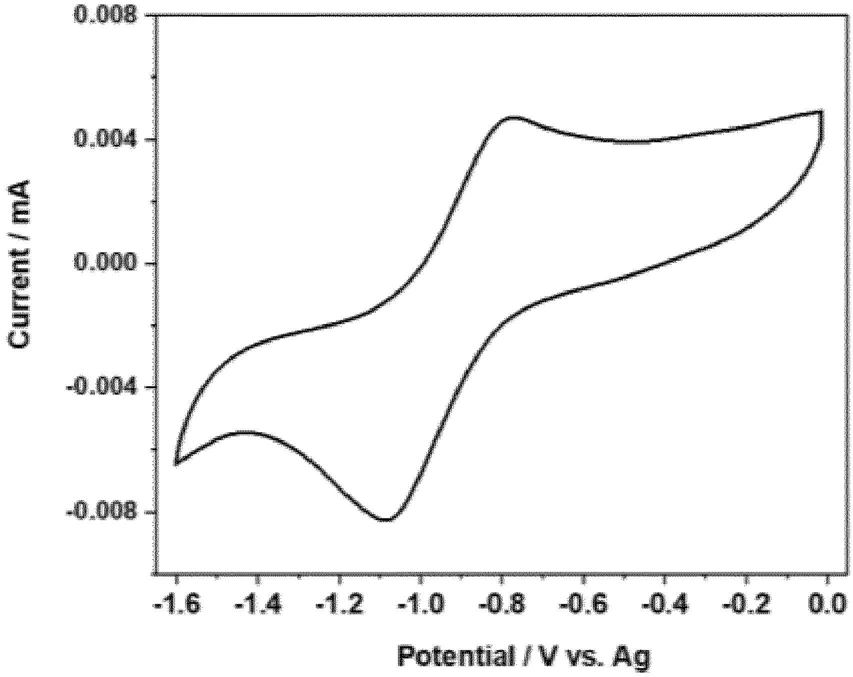

Figure 6

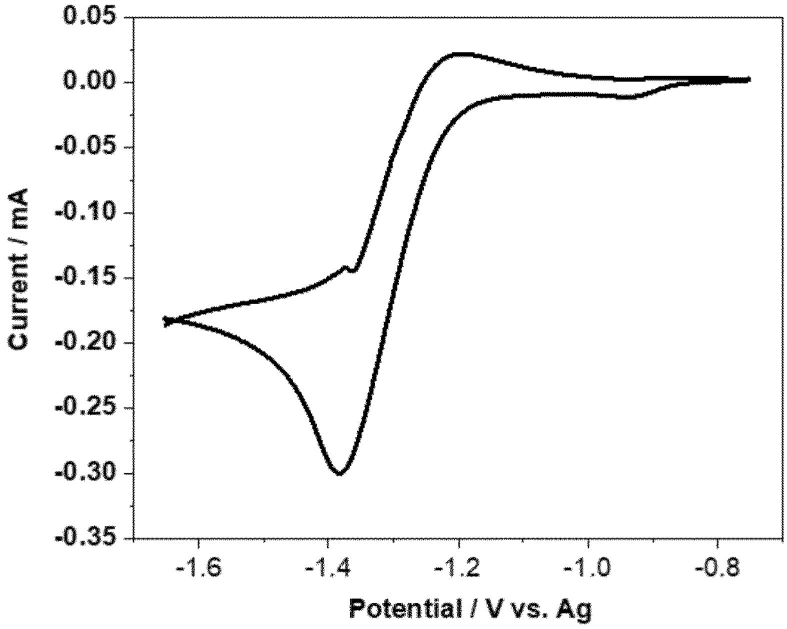


Figure 7

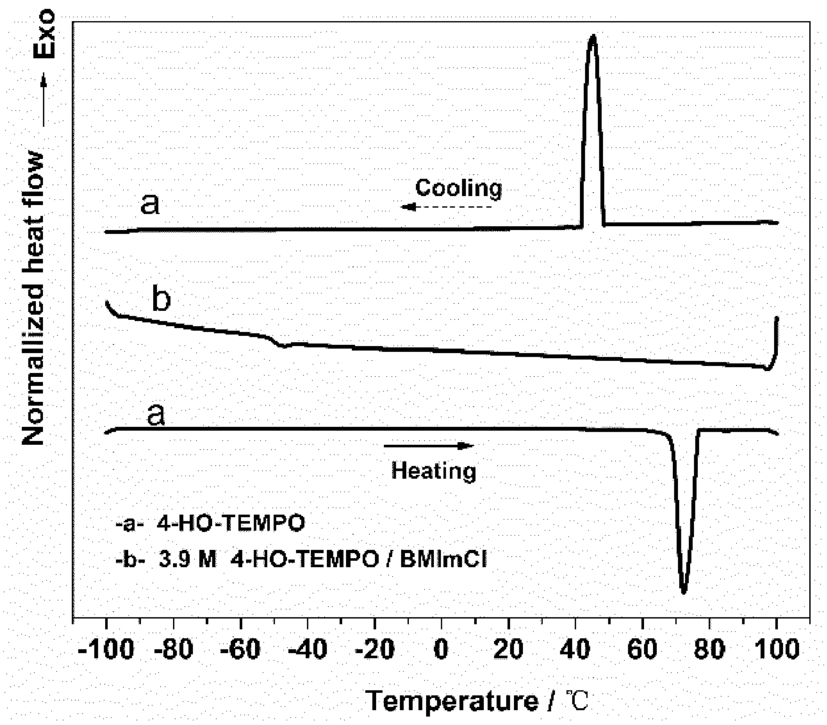

Figure 8

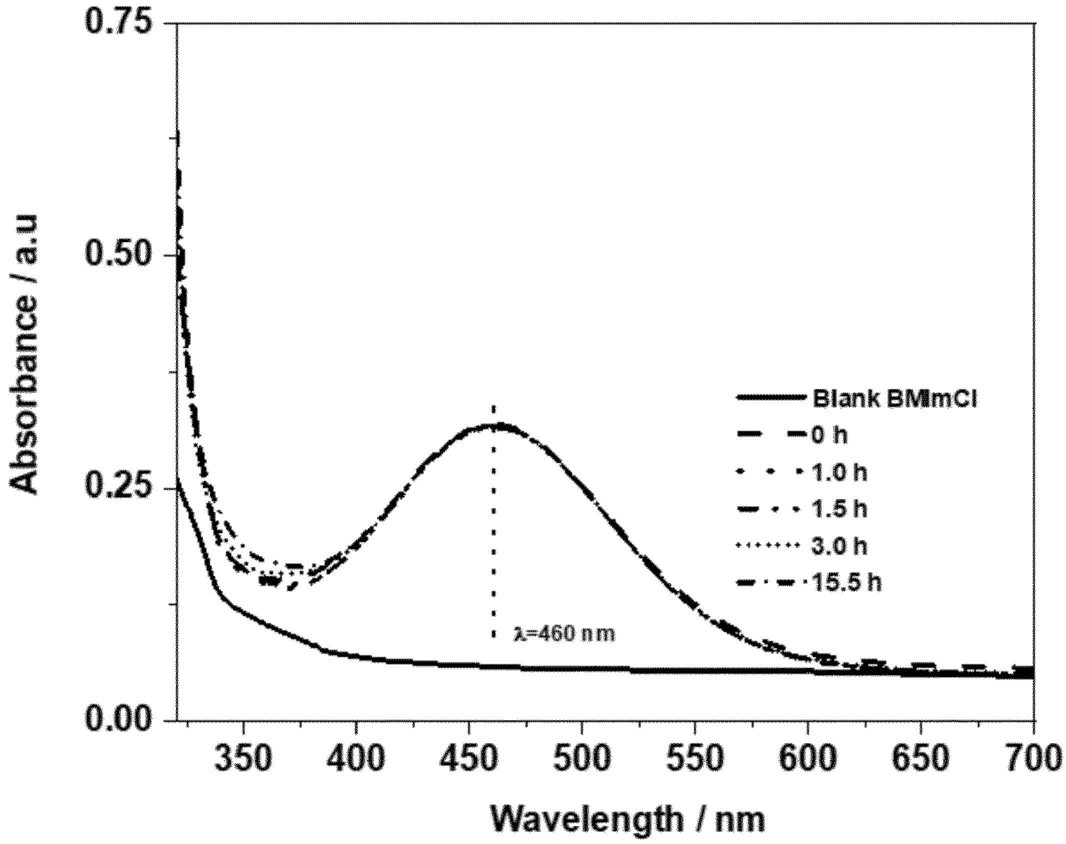
0.75
0.50
0.25
0.00
Absorbance / a.u
350
400
450
500
550
600
650
700
Wavelength / nm
Blank BMImCl
0 h
1.0 h
1.5 h
3.0 h
15.5 h
λ=460 nm

Europäisches Patentamt
European Patent Office
Office européen des brevets

# EUROPEAN SEARCH REPORT

Application Number
EP 21 18 3623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WYLIE LUKE ET AL: "Reversible Reduction of the TEMPO Radical: One Step Closer to an All-Organic Redox Flow Battery", ACS SUSTAINABLE CHEMISTRY & ENGINEERING, vol. 8, no. 49, 2 December 2020 (2020-12-02), pages 17988-17996, XP055864805, US ISSN: 2168-0485, DOI: 10.1021/acssuschemeng.0c05687 * abstract; page 17994, left-hand column, second paragraph * ----- | 1-15 | INV. H01M8/18 |
| X | JP 2017 117752 A (JFE ENG CORP) 29 June 2017 (2017-06-29) * par 16-20; claim 2 * ----- | 1,2,4-6, 8,11-15 | |
| A | JAN WINSBERG ET AL: "Redox-Flow Batteries: From Metals to Organic Redox-Active Materials", ANGEWANDTE CHEMIE INTERNATIONAL EDITION, vol. 56, no. 3, 7 November 2016 (2016-11-07), pages 686-711, XP055509566, ISSN: 1433-7851, DOI: 10.1002/anie.201604925 * the whole document * ----- | 1-15 | TECHNICAL FIELDS SEARCHED (IPC) H01M |

The present search report has been drawn up for all claims

1

| Place of search | Date of completion of the search | Examiner |
|---|---|---|
| Munich | 23 November 2021 | Bettio, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT ON EUROPEAN PATENT APPLICATION NO.** EP 21 18 3623

This annex lists the patent family members relating to the patent documents cited in the above-mentioned European search report. The members are as contained in the European Patent Office EDP file on
The European Patent Office is in no way liable for these particulars which are merely given for the purpose of information.

23-11-2021

| Patent document cited in search report | Publication date | Patent family member(s) | Publication date |
|---|---|---|---|
| JP 2017117752 A | 29-06-2017 | JP 6682852 B2<br>JP 2017117752 A | 15-04-2020<br>29-06-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019174910 A
- US 20160197371 A


### Non-patent literature cited in the description


- **Y. DING et al.** *Chem. Soc. Rev.,* 2018, vol. 47, 69
- **Z. SONG et al.** *Energy Environ. Sci.,* 2013, vol. 6, 2280
- **X. WEI et al.** *ACS Energy Lett.,* 2017, vol. 2, 2187
- **DING, Y. et al.** *Chem. Soc. Rev.,* 2017, vol. 47, 69
- **Y. WANG et al.** *Energy Environ. Sci.,* 2016, vol. 9, 2267
- **K. TAKECHI et al.** A Highly Concentrated Catholyte Based on a Solvate Ionic Liquid for Rechargeable Flow Batteries. *Adv. Mater.,* 2015, vol. 27, 2501-2506
- **C. B'HYMER.** Residual Solvent Testing: A Review of Gas-Chromatographic and Alternative Techniques. *Pharmaceutical Research,* 2003, vol. 20 (3), 337-344